# EUROPEAN PATENT APPLICATION

(11) **EP 4 482 116 A1**
(43) Date of publication of application: **25.12.2024**
(21) Application number: 23205766.1
(22) Date of filing: 25.10.2023
(51) Int. Cl.: H04L 51/224, H04L 51/226

(54) **NOTIFICATION MESSAGE PROCESSING METHOD AND APPARATUS, AND NON-TRANSITORY COMPUTER-READABLE STORAGE MEDIUM**

(30) Priority: 19.06.2023 CN 202310729966
(71) Applicant: Beijing Xiaomi Mobile Software Co., Ltd., Beijing 100085 (CN)
(72) Inventor: PENG, Cong, Beijing, 100085 (CN)
(74) Representative: dompatent von Kreisler Selting Werner - Partnerschaft von Patent- und Rechtsanwälten mbB

(57) **Abstract**

A notification message processing method includes: in response to being triggered to display a notification message different from a current application when a terminal is running the current application, detecting (S101) a delay processing operation on the notification message, the delay processing operation being used to trigger a delay processing on the notification message, and different delay processing operations corresponding to different delay processing modes; and performing (S102) a delay processing on the notification message based on a detected delay processing operation.

## Description

### TECHNICAL FIELD

The present disclosure relates to the field of terminal technologies, and more specifically, to a notification message processing method and apparatus, and a non-transitory computer-readable storage medium.

### BACKGROUND

With the continuous development of smart phones and other terminals, more and more functions appear in people's view, and smart terminals undertake more and more functions. For example, all kinds of work can be done through the terminals, and the information that users need to deal with is becoming more and more diverse.

In the related prior art technologies, when a terminal receives information of other applications during the process of running a certain application, a notification message of the information is displayed in the form of a pop-up window at the top of a display interface of the terminal.

### SUMMARY

In order to overcome the problems existing in the related prior art technology, the present disclosure provides a notification message processing method and apparatus, and a storage medium.

According to a first aspect of the present disclosure, there is provided a notification message processing method, including: in response to being triggered to display a notification message different from a current application when a terminal is running the current application, detecting a delay processing operation on the notification message, the delay processing operation being used to trigger a delay processing on the notification message, and different delay processing operations corresponding to different delay processing modes; and performing the delay processing on the notification message based on the detected delay processing operation.

According to a second aspect of the present disclosure, there is provided a notification message processing apparatus, including: a processor; a memory for storing instructions executable by the processor; wherein the processor is configured to implement the notification message processing method according to the first aspect or any implementation of the first aspect.

According to a third aspect of the present disclosure, there is provided a non-transitory computer-readable storage medium, having stored thereon instructions that, when executed by a processor of a terminal, enables the terminal to execute the notification message processing method according to the first aspect or any implementation of the first aspect.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the description, illustrate examples consistent with the present disclosure and, together with the description, serve to explain the principles of the present disclosure.
FIG. 1 is a schematic diagram of an application interface displaying a notification message pop-up window according to an example of the present disclosure.
FIG. 2 is a flowchart of a notification message processing method according to an example of the present disclosure.
FIG. 3 is a flowchart illustrating a method of performing a delay processing on a notification message based on a detected delay processing operation according to an example of the present disclosure.
FIG. 4 is a schematic diagram of a notification message processing method according to an example of the present disclosure.
FIG. 5 is a schematic diagram illustrating a method of jumping to a processing interface corresponding to a notification message after stopping running a current application according to an example of the present disclosure.
FIG. 6 is a schematic diagram of a notification message processing method according to an example of the present disclosure.
FIG. 7 is another flowchart illustrating a method of performing a delay processing on a notification message based on a detected delay processing operation according to an example of the present disclosure.
FIG. 8 is a schematic diagram illustrating a method of jumping from a current display interface to an application interface corresponding to a target notification message when a touch operation for the target notification message is detected according to an example of the present disclosure.
FIG. 9 is a schematic diagram of a notification message processing method according to an example of the present disclosure.
FIG. 10 is a flowchart illustrating a method of displaying tag information at a first position on a current display interface on which the current application is running according to an example of the present disclosure.
FIG. 11 is a schematic diagram of a notification message processing method according to an example of the present disclosure.
FIG. 12 is a schematic diagram of a notification message processing method according to an example of the present disclosure.
FIG. 13 is a flowchart of a notification message processing method according to an example of the present disclosure.
FIG. 14 is a flowchart illustrating a method of performing a delay processing on a notification message based on a detected delay processing operation according to an example of the present disclosure.
FIG. 15 is a schematic diagram of a notification message processing method according to an example of the present disclosure.
FIG. 16 is a schematic diagram of a notification message processing method according to an example of the present disclosure.
FIG. 17 is a schematic diagram of a notification message processing method according to an example of the present disclosure.
FIG. 18 is a flowchart illustrating a method of setting a delay time for reminding to process a notification message according to an example of the present disclosure.
FIG. 19 is a schematic diagram of a notification message processing method according to an example of the present disclosure.
FIG. 20 is a schematic diagram of a notification message processing method according to an example of the present disclosure.
FIG. 21 is a schematic diagram of a notification message processing method according to an example of the present disclosure.
FIG. 22 is a block diagram of a notification message processing apparatus according to an example of the present disclosure.
FIG. 23 is a block diagram of a device for notification message processing according to an example of the present disclosure.

### DETAILED DESCRIPTION

Description will now be made in detail to examples, examples of which are illustrated in the accompanying drawings. The following description refers to the accompanying drawings in which the same numbers in different drawings represent the same or similar elements unless otherwise indicated. The implementations in the following description of exemplary embodiments do not represent all implementations consistent with the present disclosure.

With the continuous development of smart phones and other terminals, more and more functions appear in people's view, and smart terminals undertake more and more functions. For example, all kinds of work can be done through the terminals. And the information that users need to deal with is becoming more and more diverse.

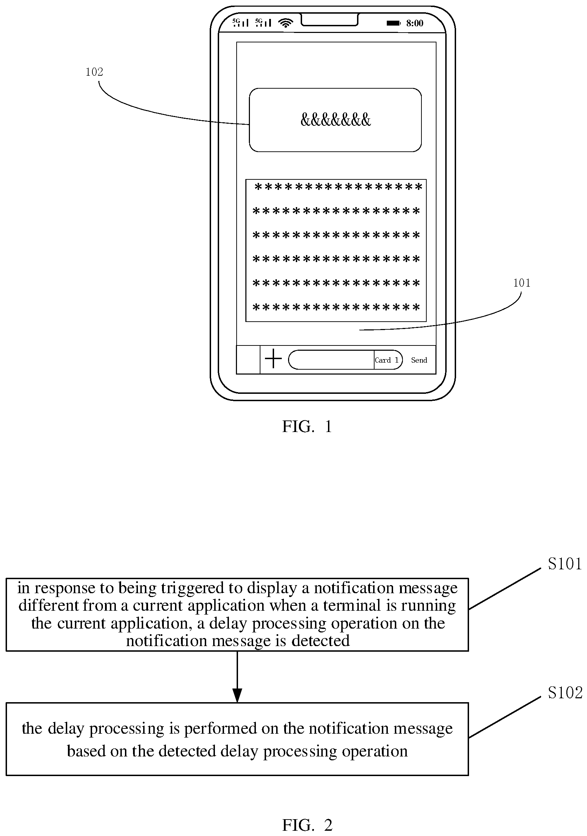

FIG. 1 is a schematic diagram of an application interface displaying a notification message pop-up window shown according to an example of the present disclosure, as shown in FIG. 1, in the related technology, when the terminal is running a certain application APP, notification messages 102 sent by other APPs can be displayed in the form of pop-up windows on the APP interface 101.

When the user cannot process in time, it may happen that the user forgets some important information because of having not processed the information for a long time.

In view of this, the present disclosure provides a notification message processing method, which helps the user to realize flexible processing on notification messages in various scenarios by performing multifunctional operations on the pop-up window of notification messages, and prevents the user from forgetting to process important messages notified by other applications in a hurry when processing the current transaction.

Herein, the notification message processing method provided by the present disclosure is mainly applied to smart mobile terminals with a touch display device, such as smart phones, smart tablet computers, etc., and the present disclosure makes no specific limitation thereto.

The following examples mainly describe the specific implementations of how to perform a delay processing on the notification message.

FIG. 2 is a flowchart of a notification message processing method shown according to an example of the present disclosure, and as shown in FIG. 2, the method includes the following steps.

In step S101, in response to being triggered to display a notification message different from a current application when a terminal is running the current application, a delay processing operation on the notification message is detected.

According to the present disclosure, the delay processing operation is used to trigger a delay processing on the notification message, and different delay processing operations correspond to different delay processing modes.

In step S102, the delay processing is performed on the notification message based on the detected delay processing operation.

Optionally, the delay processing operation on the notification message is a touch operation on a terminal display screen, such as touch operations of sliding to the left, sliding to the right etc. Herein, a different delay processing operation has a different way to perform a delay processing on the notification message. It can be understood that the touch operation that executes a delay processing on the notification message in the present disclosure includes, but is not limited to, sliding to the left, and sliding to the right.

By performing different delay processing operations on the notification message, the user is provided with more choices, which helps the user to process the notification message more flexibly, and prevents the user from forgetting to process the important messages notified by other applications in a hurry when processing the current transaction.

In the following examples, how to perform the delay processing on the notification message through the delay processing operation is explained in detail, mainly taking the touch operations of sliding to the left and sliding to the right as an example.

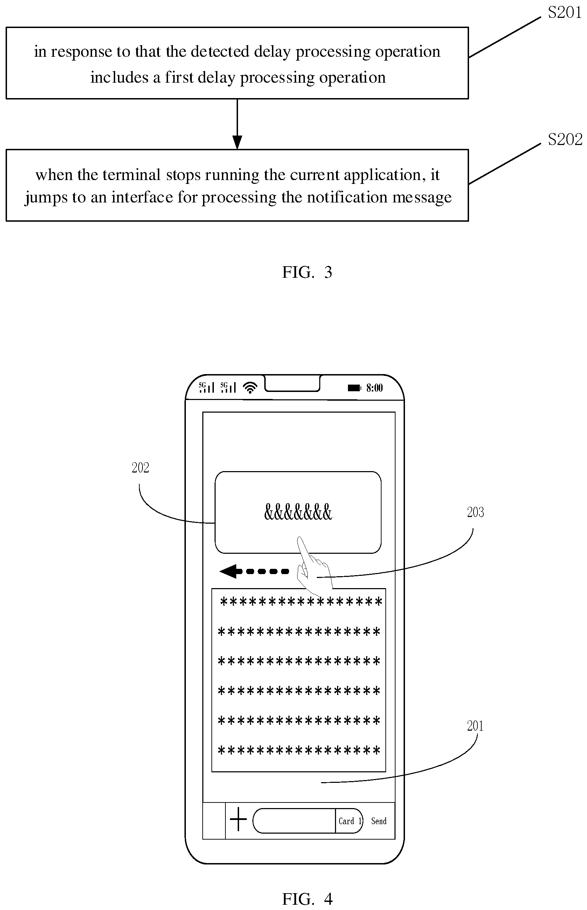

FIG. 3 is a flowchart illustrating a method of performing a delay processing on a notification message based on a detected delay processing operation shown according to an example of the present disclosure, as shown in FIG. 3, the following steps are included.

In step S201, in response to that the detected delay processing operation includes a first delay processing operation.

In step S202, when the terminal stops running the current application, it jumps to an interface for processing the notification message.

Optionally, when the delay processing operation is the first delay processing operation, the corresponding delay processing mode thereof is to jump to the processing interface for the notification message triggered to execute the first delay processing operation and to execute the processing when the terminal stops running the current application.

Optionally, when the touch operation corresponding to the first delay processing operation performed on the notification message is detected, the notification message is a notification message to be processed after the terminal stops running the current application. For example, the touch operation corresponding to the first delay processing operation can be a touch operation of sliding to the left, if it is detected that the touch operation of sliding to the left is performed on the notification message, a delay processing is performed on this notification message, for which the mode of the delay processing is jumping to the processing interface corresponding to the notification message after the terminal stops running the current application. Herein, the touch operation corresponding to the first delay processing operation provided by the present disclosure is not limited to the touch operation of sliding to the left, and the first delay processing operation takes the touch operation of siding to the left as an example for the convenience of understanding in the following examples.

In an example, FIG. 4 is a schematic diagram of a notification message processing method shown according to an example of the present disclosure, and as shown in FIG. 4, the first delay processing operation can be a touch operation that triggers a left slide 203 on the notification message 202 when it is on the processing interface 201 of the current application.

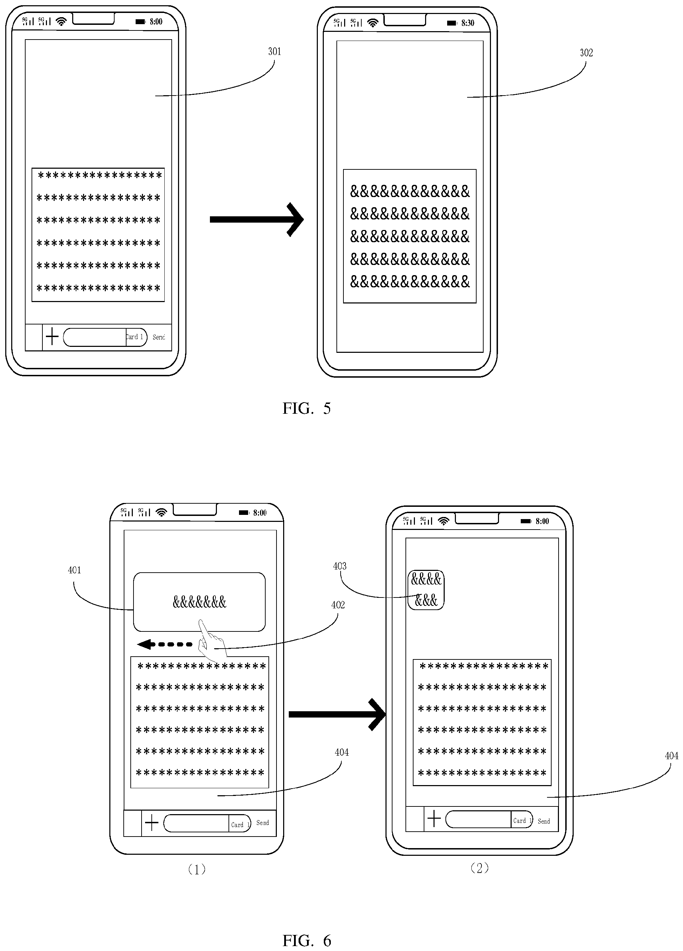

In an example, FIG. 5 is a schematic diagram illustrating a method of jumping to a processing interface corresponding to a notification message after stopping running a current application shown according to an example of the present disclosure, and as shown in FIG. 5, when the terminal stops running the current application 301, it jumps to an interface 302 for processing the notification message.

Optionally, in response to that the number of the notification message is multiple, when the terminal stops running the current application, it sequentially jumps to interfaces for processing the notification messages according to a priority sequence of the multiple notification messages.

Herein, the mode of sequentially jumping is jumping to the processing interface corresponding to a next notification message after each application is closed.

For example, if the priority sequence corresponding to a first notification message, a second notification message and a third notification message is the second notification message, the third notification message and the first notification message, when the terminal stops running the first application, the second notification message is preferentially processed, and it jumps to the processing interface for the second notification message. When the terminal stops running the application corresponding to the second notification message, it jumps to the processing interface for the third notification message. When the terminal stops running the application corresponding to the third notification message, it jumps to the processing interface for the first notification message.

Optionally, if there are multiple notification messages triggered to execute the first delay processing operation, it is necessary to determine the priority sequence of the multiple notification messages. It sequentially jumps to the interfaces for processing the notification messages according to the priority sequence of the multiple notification messages when the terminal stops running the current application.

Herein, optionally, the priority sequence can be determined in the following manner: a priority sequence from high to low is determined according to a chronological sequence of the first delay processing operations respectively corresponding to the multiple notification messages.

Optionally, if there are multiple notification messages triggered to execute the first delay processing operation, corresponding priority sequence is determined according to a chronological sequence when each notification message is triggered to execute the first delay processing operation. Herein, the earlier the time of being triggered to execute the first delay processing operation is, the higher its priority is. when the terminal stops running the current application, the sequence of sequentially jumping to the interfaces for processing the notification messages is determined by the priority sequence from high to low.

Through the above examples, when the user is processing the information of the current application and is inconvenient to reply to messages of other applications, the notification messages are marked as a delay processing by performing the first delay processing operation on the notification messages. And after the running of the current application is finished, it jumps directly to the pages of the notification messages marked for the delay processing to process them, so as to prevent the user from forgetting to process the important messages notified by other applications in a hurry when processing the current transaction.

Herein, in some further examples of the present disclosure, the user is provided with various ways to perform other processing operations on the notification messages after the delay processing operation is performed.

Optionally, a notification message can be marked when it is detected that this notification message is triggered to execute a delay processing operation, and the tag information corresponding to the notification message can be obtained and displayed on the display interface of the current application. It can be understood that the tag information is used to mark the notification message for a delay processing.

Herein, the above example corresponding to FIG. 3 can also implement the above-mentioned example, that is, after the first delay processing operation executed on the notification message is detected, the tag information corresponding to the notification message triggered to execute the first delay processing operation is obtained and displayed on the display interface of the current application.

FIG. 6 is a schematic diagram of a notification message processing method shown according to an example of the present disclosure, and as shown in FIG. 6(1), the first delay processing operation can be a touch operation that triggers to slide to the left 402 on the notification message 401.

As shown in FIG. 6(2), the first position can be the upper position on the left edge of the terminal display interface. The notification message marked as a delay processing can be displayed in the first position when performing a slide to the left on the notification message. After the current application processing is finished, it immediately jumps to the processing interface corresponding to the notification message displayed at the first position, so as to process the notification message displayed at the first position. The tag information 403 displayed at the first position can be an icon representing this notification message or an application icon corresponding to this notification message if there is only one notification message for a delay processing on the currently running application interface 404.

Optionally, the tag information displayed on the display interface of the current application is prompt information. The notification message triggered to execute the delay processing operation is displayed on the display interface of the currently running application, and the user is reminded of the notification message to be processed after stopping running the current application through an intuitive display mode. Herein, if multiple notification messages are triggered to execute the first delay processing operation, the user can also be prevented from forgetting which notification messages are triggered for a delay processing in a hurry by displaying the tag information corresponding to the notification messages on the display interface of the current application. Moreover, the user can avoid repeating the delay processing operation on the same object according to the displayed tag information if multiple notification messages sent by the same object are obtained at different time.

Optionally, a touch operation can be executed on the tag information displayed on the display interface of the current application. The corresponding function is executed through the detected touch operation.

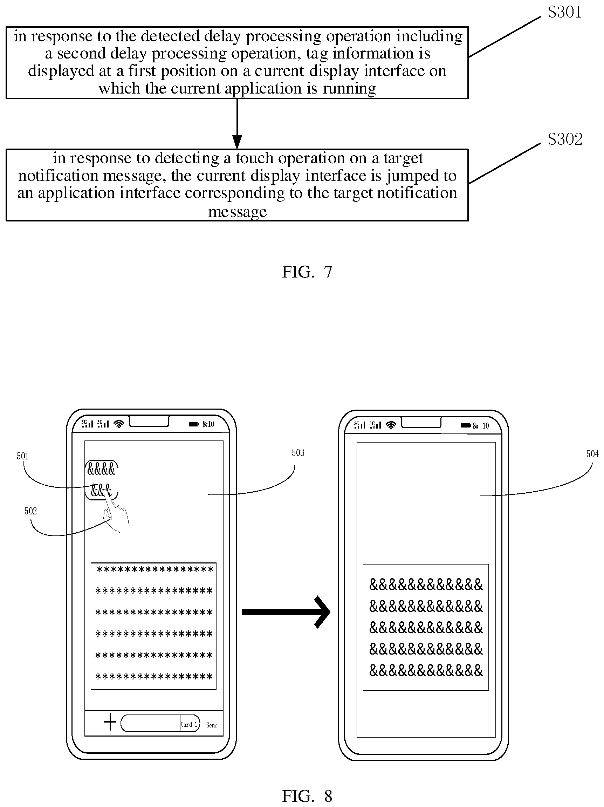

FIG. 7 is another flowchart illustrating a method of performing a delay processing on a notification message based on a detected delay processing operation shown according to an example of the present disclosure, and as shown in FIG. 7, the following steps are included.

In step S301, in response to the detected delay processing operation including a second delay processing operation, tag information is displayed at a first position on a current display interface on which the current application is running.

In step S302, in response to detecting a touch operation on a target notification message, the current display interface is jumped to an application interface corresponding to the target notification message.

Optionally, when the delay processing operation is the second delay processing operation, the corresponding delay processing mode thereof is to mark the notification message triggered to execute the second delay processing operation, and display the tag information corresponding to the delay processing at the first position on the current display interface. In the process of running the current application, the user can execute a touch operation on the tag information displayed in the first position at any time as required to jump to the processing interface for the notification message without waiting for the current application to stop running. Herein, the touch operation corresponding to the first delay processing operation provided by the present disclosure includes, but not limited to, the touch operation of sliding to the left, and for ease of understanding, the second delay processing operation takes the touch operation of sliding to the left as an example in the following examples.

Herein, in the above examples, the touch operation for the tag information can be a click operation, and when the click operation for the tag information is detected, the display interface of the current application is jumped to the processing interface for the notification message corresponding to the click operation. By selecting the notification message to be executed by way of customization, it brings more convenient use experience to the user and prevents the user from forgetting the notification message.

FIG. 8 is a schematic diagram illustrating a method of jumping from a current display interface to an application interface corresponding to a target notification message when a touch operation for the target notification message is detected shown according to an example of the present disclosure, as shown in FIG. 8, if the tag information 501 is an icon representing this notification message, the current application interface 503 is jumped to the processing interface 504 corresponding to this notification message when the touch operation 502 for the target notification message is detected. If the tag information is the application corresponding to this notification message, the terminal jumps from the currently running application interface to the application interface corresponding to this notification message, and the user can process the unprocessed information displayed in this application interface.

Selecting the notification message to be processed according to the user's needs not only helps to prevent the user from forgetting to process the important messages notified by other applications in a hurry when processing the current transaction, but also provides more choices for the user, helps the user to process the notification message more flexibly, and improves the use's use experience.

Optionally, the tag information corresponding to multiple notification messages triggered to execute the delay processing operation is displayed at the first position on the current display interface running the current application, when the user is busy processing the currently running application, the tag information thereof can be displayed on the display interface of the current application until it is detected that the user stops running the current application , then it sequentially jumps to the processing interfaces for the notification messages corresponding to the tag information. In addition, if the user wants to give priority to processing the notification messages in the tag information when processing the currently running application, the user can touch the notification messages in the tag information. The notification messages for a delay processing are selected according to the user's requirements, and the current display interface can be jumped to the application interface corresponding to the target notification message when the touch operation for the target notification message is detected.

Optionally, the user can click the tag information at any time as required to jump to the interface for processing the notification message. If there are multiple notification messages, when jumping to the processing interface corresponding to one notification message, the tag information corresponding to other notification messages remains displayed until all the processing is completed. Herein, each notification message will not be displayed after the user opens the corresponding processing interface.

Further, if there are unprocessed notification messages after the user returns to the current application, it will sequentially jump for the remaining notification messages after the current application stops running in the case wherein the user does not actively make a click.

Optionally, the tag information is used to mark the notification message for a delay processing. Herein, the tag information displayed in the first position can be understood as an icon corresponding to the notification message for a delaying processing. The tag information can also be understood as an interface to jump to the application interface corresponding to the target notification message when a touch operation for the tag information corresponding to the target notification message is detected.

Through the above example, when the user is in the process of processing the information of the current application and is inconvenient to reply to messages of other applications, a delay processing is performed on the notification messages, and the notification messages are displayed on the display interface in an intuitive way, which brings more convenient use experience to the user. Moreover, the notification message to be executed is selected by customization, and it directly jumps to the page of the notification message marked for a delay processing to perform a processing, so as to avoid the user from forgetting to process the important messages notified by other applications in a hurry when processing the current transaction.

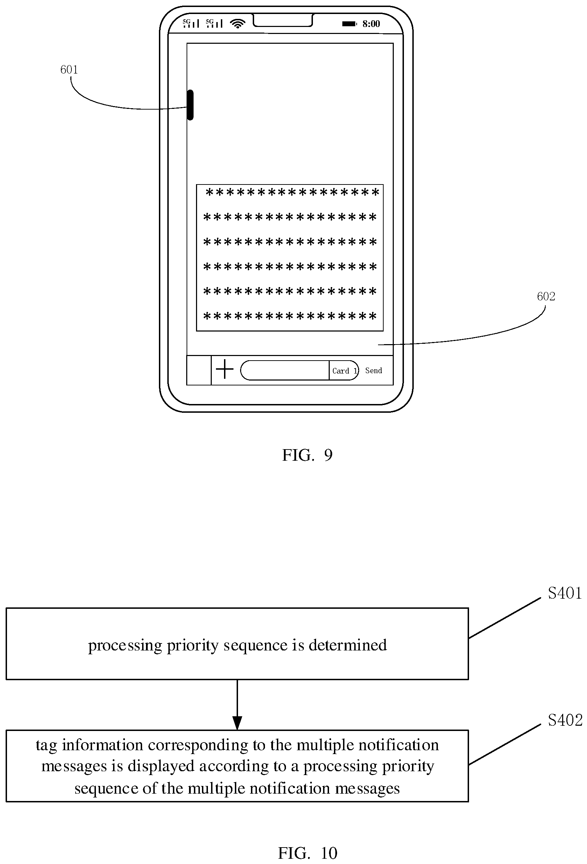

In another example of the present disclosure, FIG. 9 is a schematic diagram of a notification message processing method shown according to an example of the present disclosure, as shown in FIG. 9, when the current application processed by the user takes a long time, and other operations such as a touch control are not performed on the tag information for a period of time, the tag information 601 of the notification message displayed in the current application interface marked for a delay processing can be hidden at the edge of the current application interface 602 to avoid affecting the operation of the current application. Herein, the present disclosure makes no specific limitation thereto.

FIG. 10 is a flowchart illustrating a method of displaying tag information at a first position on a current display interface on which the current application is running shown according to an example of the present disclosure, and as shown in FIG. 10, the following steps are included.

In step S401, a processing priority sequence is determined.

In step S402, tag information corresponding to the multiple notification messages is displayed according to a processing priority sequence of the multiple notification messages.

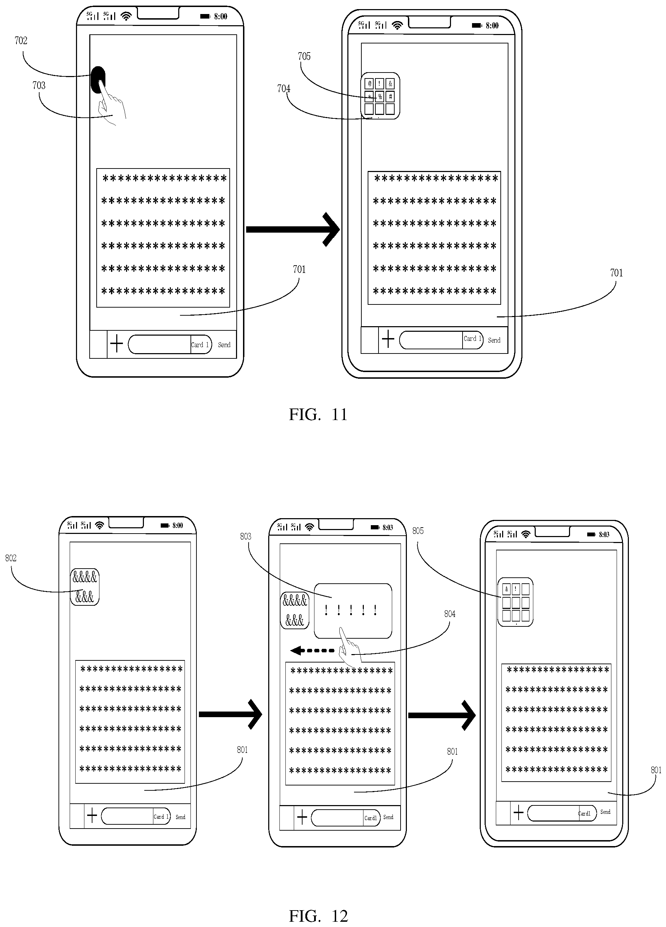

FIG. 11 is a schematic diagram of a notification message processing method shown according to an example of the present disclosure, and as shown in FIG. 11, the first position displayed on the current application interface 701 can be a floating window 702 when there are multiple notification message triggered for a delay processing. The floating window can be displayed in the current application interface in a minimized form when the current application is running, and the minimized floating window can be hidden outside the interface edge if no touch operation is detected on the floating window, as shown in FIG. 11. If it is desired to process the notification messages in the floating window, the hidden floating window can be displayed in the upper left corner of the interface of the current application through a specific touch operation, and when the minimized floating window is clicked 703, then multiple notification messages 705 triggered for a delay processing is displayed in the form of a small window 704.

Herein, the floating window can be displayed in the upper left corner of the terminal display screen and suspended still, and displayed in the form of a small window, in which small winnow all the notification messages to be processed can be displayed.

Optionally, multiple notification messages for a delay processing displayed in a small window can be displayed in the following two common ways: in the form of a list and in the form of an icon. Herein, as shown in FIG. 11, the arrangement of icons can be 3X3, that is, there are icons of three notification messages in the horizontal direction and icons of three notification messages in the vertical direction. The present disclosure makes no specific limitation thereto, and the specific implementation depends on the actual situations.

Optionally, as shown in FIG. 7, a first notification message is displayed in the first position of the current interface in the form of a small icon after the first notification message is obtained in the currently running application interface and a left-sliding delay processing operation is performed. FIG. 12 is a schematic diagram of a notification message processing method according to an example of the present disclosure, as shown in FIG. 12, and after elapse of a certain period of time, in the currently running application interface 801, the tag information 802 of the first notification message is displayed in the first position of the current interface, and a second notification message 803 is obtained and a delay processing operation of sliding to the left is performed, then a floating window can be automatically popped up in the current application interface 801 based on two notification messages to be performed with a delay processing, and the two notification messages are displayed in the small window 805 of the floating window in the form of a list or an icon.

In an implementation, optionally, the processing priority sequence is determined based on application types of applications corresponding to the notification messages.

In an implementation, optionally, the processing priority sequence is determined from high to low based on a chronological sequence of the second delay processing operation corresponding to each of the multiple notification messages.

In an example, multiple notification messages are sequentially triggered to execute the second delay processing operation chronologically, wherein the application type of the application corresponding to the first notification message is marked as consulting APP, the application type of the application corresponding to the second notification message is marked as social APP, and the application type of the application corresponding to the third notification message is marked as game APP. If the social APP has a higher priority than the consulting APP and the consulting APP has a higher priority than the game APP, the notification messages corresponding to the displayed tag information are: the second notification message, the first notification message and the third notification message. Herein, if no touch operation is performed on the tag information, it sequentially jumps to the interfaces for processing the notification messages in the display sequence of the tag information after the current application stops running.

In an example, when the number of the notification message is multiple, the display positions of multiple notification messages triggered for the delay processing in the tag information are determined through the processing sequence in which the second delay processing operation is performed on the notification messages. It can jump to the interface for processing notification messages when the current application stops running.

Optionally, if there are multiple notification messages corresponding to the same application type in the notification messages triggered to execute the second delay processing operation, the application type corresponding to the notification message is determined preferentially, and then the processing priority sequence is determined according to the application type. On this basis, the processing priority sequence is determined according to a chronological sequence of the corresponding second delay processing operation if the application type corresponding to the notification messages triggered to execute the second delay processing operation is an already-existing application type.

Optionally, processing of the notification message triggered to execute the second delay processing operation at the earliest time is given priority when the current application stops running, that is, this notification message is at the first display position in the tag information. It can jump to the interface for processing notification messages in the order of processing priority. The notification messages marked for a delay processing are sequentially displayed in the tag information based on the sequence in which the notification messages are triggered to execute the second delay processing operation, and the earlier the notification message is triggered to execute the second delay processing operation, it is more higher displayed in the tag information, it can directly jump to the interface for the notification message to be processed in the tag information if it is detected that the current application stops running, and, it preferentially jumps to the interface for the notification message triggered to execute the second delay processing operation at the earliest, and this message is processed preferentially. Further, it sequentially jumps to the processing interfaces for the corresponding notification messages according to the display sequence of multiple notification messages in the tag information.

Optionally, the display sequence of multiple notification messages displayed at the first position in the current application interface is determined according to a chronological sequence when the second delay processing operation corresponding to each of the multiple notification messages is detected. A floating window is automatically popped up at the first position of the current first application interface based on the first notification message and the second notification message when the second notification message is triggered to execute the second delay processing operation of sliding to the left. And the display sequence in the floating window is determined according to the time at which the second delay processing operation is executed, and as shown in FIG. 11, that is, the sequence displayed in the small window 704 of the floating window is the first notification message and the second notification message. The third notification message is automatically displayed in the small window of the floating window and is displayed subsequently at a next display position after the second notification message when it is detected that the third notification message is also triggered to execute the second delay processing operation of sliding to the left.

Optionally, in response to detecting that different notification messages sent by other applications different from the currently running application in different time periods are triggered to execute the second delay processing operation in the interface of the currently running application, the applications corresponding to the notification messages are marked, and it is detected that the multiple notification messages correspond to the same one application. It can be understood that the multiple notification messages sent by one application are triggered to execute the second delay processing operation, and the processing sequence of other notification messages sent by the application can be determined by determining the notification message triggered to execute the second delay processing operation, which is earlier in time, among the notification messages sent by the application. Through the above embodiment, a more convenient use experience is brought to the user, and the user is prevented from forgetting important notification messages.

Optionally, if all the messages of the application triggered for a delay processing have already been processed and the instruction to stop the application is executed, the tag information of the already-processed notification message will be automatically deleted in real time, which means that the notification message has already been processed. If the tag information of the notification message is the corresponding application icon, the application icon is automatically deleted in real time, so as to avoid a formal conflict to the unprocessed notification message. If an adjusting operation is performed on the tag information of the unprocessed notification message, when the already-processed notification message is still displayed and can also be adjusted, it causes operational errors. However, the present disclosure makes no limitation to real-time automatic deletion, and it can also include graying the tag information of the already-processed notification message to not allow any operation to be performed thereto, and no specific limitation is made to the specific implementation of processing of the already-processed tag information.

Optionally, the processing priority sequence of multiple notification messages triggered for a delay processing when the terminal stops running the current application is determined from high to low according to the display sequence of multiple notification messages in the small window of the floating window.

Optionally, the display positions of multiple notification messages in the tag information can be adjusted, such as adjustments of up and down, left and right, page change and the like. Herein, the first display position of the floating window is the position with the highest priority, and the notification message located at the first display position of the floating window is the message whose processing has the highest priority, and the corresponding notification messages are processed sequentially according to the display positions in the floating window.

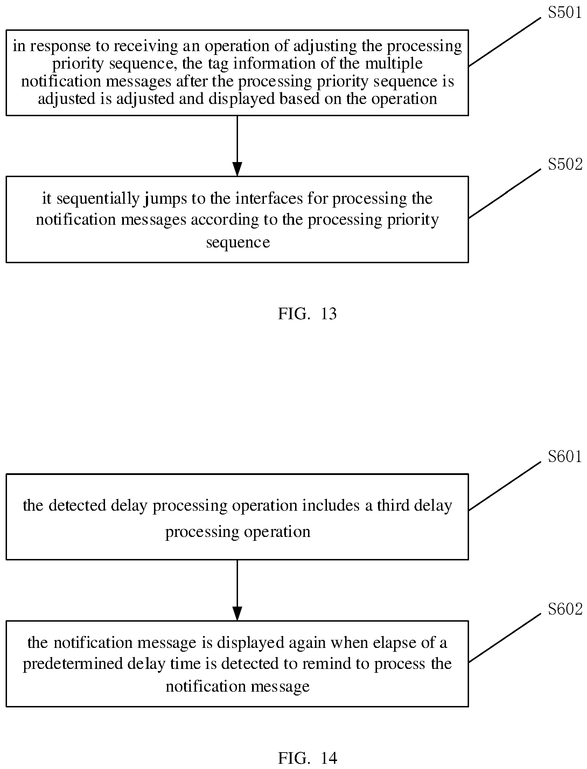

FIG. 13 is a flowchart of a notification message processing method shown according to an example of the present disclosure, and as shown in FIG. 13, the following steps are included.

In step S501, in response to receiving an operation of adjusting the processing priority sequence, the tag information of the multiple notification messages after the processing priority sequence is adjusted is adjusted and displayed based on the operation.

In step S502, it sequentially jumps to the interfaces for processing the notification messages according to the processing priority sequence.

Optionally, a certain predetermined instruction is executed on the icon of an application, for example, an icon of an application in the predetermined window is long-pressed for e.g. two seconds, such that all the application icons in the predetermined window are in a to-be-processed state, wherein the to-be-processed operation on the application icon can include: other operations such as dragging, moving or deleting etc.

Optionally, the display positions of multiple notification messages in a predetermined window can be adjusted by dragging and moving the notification messages, and the display sequence adjusted according to the user's needs helps the user to process the notification messages more flexibly, so as to prevent the user from forgetting to process the important messages notified by other applications in a hurry when processing the current transaction.

Optionally, by performing a deleting operation on a certain notification message, it is possible to avoid the phenomenon that the information that does not need to be replied is displayed on the corresponding application interface resulting from that the user slides the pop-up window of a notification message that does not need to be processed to the left due to a wrong operation, which affects the user's experience.

Optionally, the processing sequence of the notification messages triggered for a delay processing and the display sequence displayed in the first position are in the order according to a chronological sequence of the second delay processing operations corresponding to respective multiple notification messages by default. The delay processing is performed in the processing priority sequence according to the adjusted display sequence when the display sequence of multiple notification messages triggered for a delay processing is adjusted.

Optionally, it sequentially jumps to the interfaces for processing notification messages according to the adjusted processing priority sequence.

In another example of the present disclosure, a certain touch operation or a predetermined instruction can be set to exit the operation of sequentially displaying the application interfaces when sequentially jumping to the interfaces for processing notification messages, that is, the notification messages triggered for the delay processing operation are no longer processed, and the tag information of the notification messages for the delay processing is no longer displayed at the first position.

Herein, the examples of the present disclosure include, but are not limited to, re-adjusting the display positions of multiple notification messages in the predetermined window by performing instruction operations of long-pressing and moving on the list of notification messages in the predetermined window. The notification message on the uppermost display position is preferentially processed based on the adjusted position. It directly enters an application interface corresponding to a notification message by clicking the link of the notification message. The above mode of performing a delay processing on the notification message, such as the priority sequence of processing multiple notification messages, is determined according to the default mode of processing the notification message in a chronological sequence preferentially from wherein the earliest sliding to the left is executed.

In another example of the present disclosure, the delay processing operation includes a second delay processing operation, and the delay processing mode corresponding to the second delay processing operation includes a delay reminder of processing notification message. Herein, the second delay processing operation takes the touch operation of sliding to the right as an example.

FIG. 14 is a flowchart illustrating a method of performing a delay processing on a notification message based on a detected delay processing operation shown according to an example of the present disclosure, and as shown in FIG. 14, the following steps are included.

In step S601, the detected delay processing operation includes a third delay processing operation.

In step S602, the notification message is displayed again when elapse of a predetermined delay time is detected to remind to process the notification message.

In the examples of the present disclosure, when the delay processing operation is the third delay processing operation, the corresponding delay processing mode thereof is to trigger to remind the notification message again.

In an example, when the touch operation corresponding to the third delay processing operation for the notification message is detected, wherein the touch operation of sliding to the right is taken as an example, when the touch operation of sliding to the right is detected for the notification message displayed on the current application interface, the notification message is displayed again after elapse of a predetermined delay time. Herein, the touch operation corresponding to the third delay processing operation provided by the present disclosure is not limited to the touch operation of sliding to the right, and the third delay processing operation takes the touch operation of sliding to the right as an example for the convenience of understanding in the following examples.

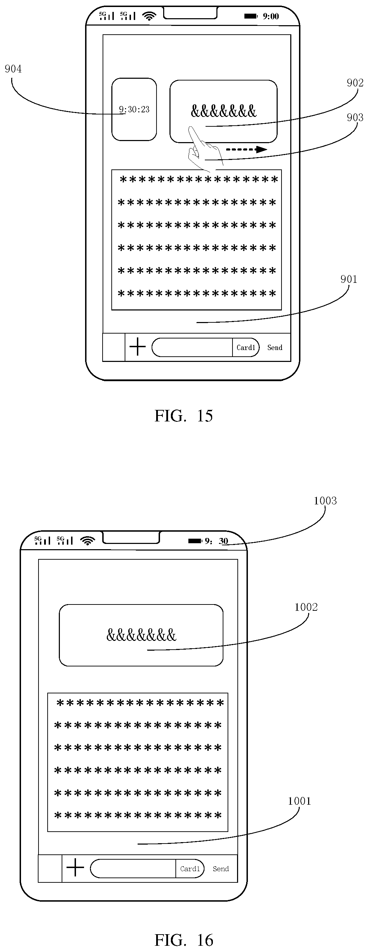

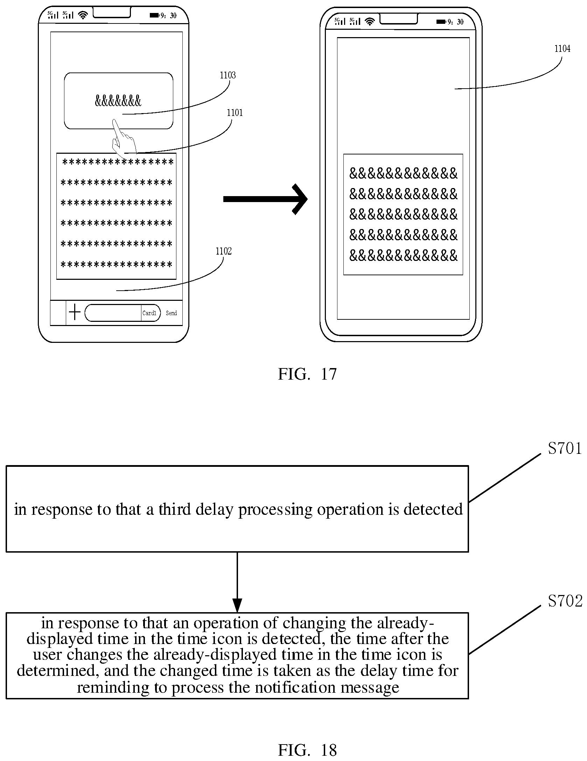

FIG. 15 is a schematic diagram of a notification message processing method shown according to an example of the present disclosure, and as shown in FIG. 15, the first notification message 902 is obtained and the touch operation of sliding 903 to the right is detected at the time which is 9:00 in the currently running application interface 901, the delay time for the next reminder to process this notification message is set to 9:30:23 based on the time icon 904 displayed in the second position of the current interface. FIG. 16 is a schematic diagram of a notification message processing method shown according to an example of the present disclosure, and as shown in FIG. 16, a pop-up window 1002 reminding to process the notification message is received at 9:30:23 in the current application interface 1001. FIG. 17 is a schematic diagram of a notification message processing method shown according to an example of the present disclosure, and as shown in FIG. 17, if it is desired to process the notification message, the pop-up window 1103 displayed in the current application interface 1102 is directly clicked 1101, and then the processing interface 1104 for the first notification message is entered. The next reminder of processing time for this notification message can be set again if the processing of the currently running application has not finished at 9:30:23 and the first notification message is reminded for the second time.

In an example, as shown in FIG. 15, when it is detected that the third delay processing operation is performed on the notification message, and the leftmost end of the pop-up window of the notification message slides to a certain position in the process of being triggered to slide to the right, a time icon is displayed at the second position of the currently running interface, and the second position displayed in the current interface can be the vacancy wherein the notification message slides to the right.

Through the above example, when the user is in a state of processing the information of the current application and it is inconvenient to reply to the messages of other applications, the notification message is set with the next reminding time and marked as a delay processing by a touch operation of performing a sliding to the right operation on the notification message, so as to prevent the user from forgetting to process the important messages notified by other applications in a hurry when processing the current transaction.

In an implementation, optionally, the predetermined delay time can be a default delay time set in advance in the terminal.

In an implementation, optionally, the predetermined delay time can be a delay time manually set by a user.

In another implementation, optionally, the predetermined delay time can be the default delay time predetermined in the terminal, and the user can also set the delay time manually.

In an example, the delay time corresponding to the third delay processing operation can be set in advance. The notification message can be reminded again based on the predetermined default delay time when it is detected that the user only performs the touch operation of sliding to the right on the notification message.

In an example, a time icon can be displayed on the current display interface during the process of detecting that the notification message is triggered to execute the third delay processing operation. The time icon is used for the user to manually set the time to delay the notification message as required. It can be determined that the user is manually setting the delay time when the touch operation on the time icon is detected.

In another example, if the notification message for the third delay processing operation is executed and the touch operation of manually setting the delay time on the time icon corresponding to the notification message is not detected, the delay time on the time icon thereof can be displayed as the delay time corresponding to the third delay processing operation set in advance by default. On this basis, if the current default display delay time does not meet the user's needs, the user can modify it manually on the basis of the displayed default delay time until the delay time satisfied by the user is reached.

In addition, in another example, if the user manually sets the delay time corresponding to the current notification message, the delay time manually set by the user is taken as the default delay time corresponding to the notification message to performs the third delay processing operation next time.

For example, if the delay time of the first notification message is manually set as 20 minutes, the first notification message is displayed in delay after 20 minutes. On this basis, when it is detected that the second notification message is triggered to perform the third delay processing operation and the user makes no manual setting, the default delay time of the second notification message is 20 minutes.

Further, if it does not meet the user's needs, the user can modify it on the basis of 20 minutes, and the modified delay time is used as the default delay time of the third notification message triggered to execute the third delay processing operation.

Setting the renewed reminding time of the notification message according to the user's needs not only helps to prevent the user from forgetting to process the important messages notified by other applications in a hurry when processing the current transaction, but also provides more choices for the user, helps the user to process the notification messages more flexibly, and improves the user's use experience.

FIG. 18 is a flowchart illustrating a method of setting a delay time for reminding to process a notification message shown according to an example of the present disclosure, as shown in FIG. 18, the following steps are included.

In step S701, in response to that a third delay processing operation is detected.

In step S702, in response to that an operation of changing the already-displayed time in the time icon is detected, the time after the user changes the already-displayed time in the time icon is determined, and the changed time is taken as the delay time for reminding to process the notification message.

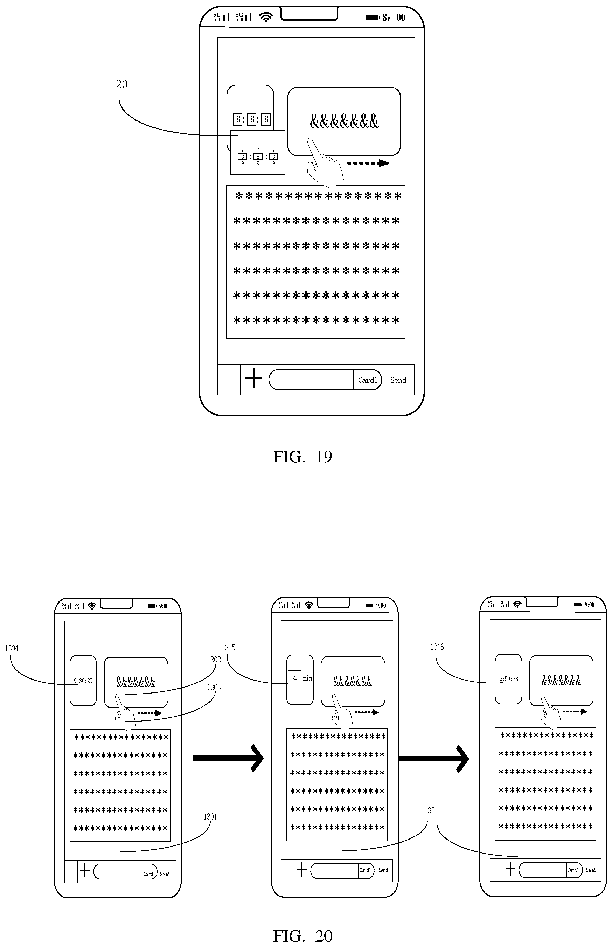

In an example, the time icon can have the following ways to set the delayed reminding time: FIG. 19 is a schematic diagram of a notification message processing method shown according to an example of the present disclosure, and as shown in FIG. 19, the user can select the delay processing time according to the time list provided by the time icon 1201, such as pulling down the list or sliding the time up and down on the basis of the time icon, editing the time desired for a delay processing in the time icon or sliding the pop-up window of the notification message to the right, and the displayed time of the time icon is determined according to the distance that the pop-up window of the notification message is slide to the right. Herein, in the notification message processing method provided by the present disclosure, at least one way to set the delay reminding time can be realized, and the present disclosure makes no limitation to the specific implementation thereof.

In another example of the present disclosure, a default delay reminding time can be set. When any notification message is triggered to slide to the right for the third delay processing operation, the reminding time displayed on the time icon thereof is the default delay reminding time. For example, the default delay reminding time set in advance is 5 minutes, and thus the second reminder is made at the fifth minute if the user does not change the time displayed on the time icon.

In an example, if the to-be-processed notification message still cannot be processed in time when it is reminded for the second time, the next reminding time can be set for the notification message again according to the touch operation of sliding to the right, and the display time on the time icon thereof is the changed time.

In an implementation, the time after the displayed time of the time icon is superimposed on the delay time edited and inputted by the user in the time icon is taken as the changed time.

In an example, FIG. 20 is a schematic diagram of a notification message processing method shown according to an example of the present disclosure, and as shown in FIG. 20, in the currently running application interface 1301, the third delay processing operation of sliding 1303 to the right is performed on the first notification message 1302, and the time on the time icon 1304 displayed in the second position on the current application interface is the first time, that is, the time representing the next reminder is the first time, which is the default delay time set in advance in the terminal. If the user changes the time and prolongs the reminding time, editing operations can be performed on the time icon. If an editing input 1305 is made in the time icon, the inputted delay time is 20 minutes, the time displayed on the time icon 1306 after the final change is the first time plus 5 minutes based on the first time displayed on the time icon before the inputted 20 minutes are superimposed, and the next reminder is made based on the changed time.

It should be noted that the specific display modes of the time displayed on the time icon in the examples of the present disclosure include, but not limited to, the display modes in the above examples, and the specific implementation is carried out according to the actual situations.

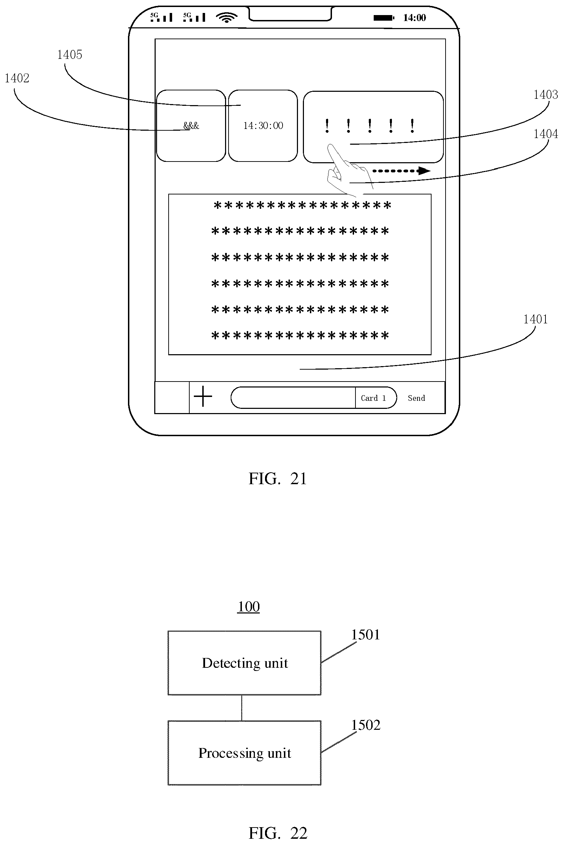

FIG. 21 is a schematic diagram of a notification message processing method shown according to an example of the present disclosure, and as shown in FIG. 21, in the currently running application interface 1401, the first delay processing operation of sliding to the left is performed for the first obtained notification message, and the tag information 1402 corresponding to the first notification message is displayed in the first position of the current application interface. After elapse of a period of time, the current application is still in a running state and the second notification message 1403 is obtained, a third delay processing operation of sliding 1404 to the right is performed on the second notification message, and the time icon 1405 corresponding to the second notification message is displayed in the second position in the current application interface.

In an example of the present disclosure, the priority of the notification message for sliding to the left is greater than the priority of the notification message for sliding to the right. For example, when the notification message for sliding to the left is being processed, a second processing reminder of a notification message based on the second delay processing operation of sliding to the right is obtained on the application page corresponding to the current notification message, in this case, processing of the notification message for sliding to the left is given priority, and the notification message for sliding to the right is executed after the processing is finished. Alternatively, the time of a third time reminding can be set on the corresponding pop-up window again when the second processing reminder is displayed.

By performing different delay processing operations on the notification messages, the user is provided with more choices, which helps the user to process the notification message more flexibly, and prevents the user from forgetting to process the important messages notified by other applications in a hurry when processing the current transaction.

Based on the same concept, the examples of the present disclosure further provide a notification message processing apparatus.

It can be understood that, in order to realize the above functions, the notification message processing apparatus provided by the examples of the present disclosure includes corresponding hardware structures and/or software modules for executing the respective functions. In combination with the units and algorithm steps of the respective examples disclosed in the examples of the present disclosure, the examples of the present disclosure can be implemented in the form of hardware or a combination of hardware and computer software. As for whether a certain function is performed by hardware or in the manner of computer software driving hardware, it depends on the specific application and design constraint of the technical solutions. Those skilled in the art can use different methods to realize the described functions for each specific application, but this realization should not be considered as beyond the scope of the technical solutions of the examples of the present disclosure.

FIG. 22 is a block diagram of a notification message processing apparatus shown according to an example of the present disclosure. Referring to FIG. 22, the apparatus 100 includes a detecting unit 1501 and a processing unit 1502.

The detecting unit 1501 is configured to, in response to being triggered to display a notification message different from a current application when a terminal is running the current application, detect a delay processing operation on the notification message, the delay processing operation is used to trigger a delay processing on the notification message, and a different delay processing operation corresponds to a different delay processing mode.

The processing unit 1502 is configured to perform a delay processing on the notification message based on a detected delay processing operation.

In an example, the processing unit 1502 is configured to perform a delay processing on the notification message based on a detected delay processing operation by: in response to that the delay processing operation detected by the detecting unit 1501 includes a first delay processing operation, jumping to an interface for processing the notification message when the terminal stops running the current application.

In an example, the processing unit 1502 is configured to perform a delay processing on the notification message based on a detected delay processing operation by: in response to that the delay processing operation detected by the detecting unit 1501 includes a second delay processing operation, displaying tag information at a first position on a current display interface on which the current application is running, the tag information being used to mark a notification message for the delay processing; and in response to that a touch operation on a target notification message is detected by the detecting unit, jumping from the current display interface to an application interface corresponding to the target notification message.

In an example, the processing unit 1502 is configured to jump to an interface for processing the notification message when the terminal stops running the current application by: in response to that the number of the notification message is multiple, sequentially jumping to interfaces for processing the multiple notification messages according to a priority sequence of the multiple notification messages when the terminal stops running the current application.

In an example, the processing unit 1502 is configured to determine the priority sequence by: determining a priority sequence from high to low according to a chronological sequence of the first delay processing operations corresponding to the multiple notification messages.

In an example, the processing unit 1502 is configured to display tag information at a first position on a current display interface on which the current application is running: the number of the notification message is multiple, tag information corresponding to the multiple notification messages is displayed according to a processing priority sequence of the multiple notification messages; the processing priority sequence is determined based on application types of applications corresponding to the notification messages; and/or the processing priority sequence is a priority sequence determined from high to low based on a chronological sequence of the second delay processing operation corresponding to each of the multiple notification messages.

In an example, the processing unit 1502 is configured to, in response to that an operation of adjusting the processing priority sequence is received, adjust and display the tag information of the multiple notification messages after the processing priority sequence is adjusted based on the operation; sequentially jump to interfaces for processing the multiple notification messages according to a priority sequence includes: sequentially jumping to the interfaces for processing the notification messages according to an adjusted processing priority sequence.

In an example, the processing unit 1502 is configured to perform a delay processing on the notification message based on a detected delay processing operation by: in response to that the delay processing operation detected by the detecting unit 1501 includes a third delay processing operation, displaying the notification message again when elapse of a predetermined delay time is detected, so as to remind to process the notification message.

In an example, the processing unit 1502 is configured to determine the predetermined delay time, wherein the predetermined delay time includes at least one of the following: a default delay time set in advance in the terminal; and a delay time manually set by a user.

In an example, the processing unit 1502 is configured to display the predetermined delay time by a time icon; the processing unit is configured to set the delay time manually set by the user by: in response to that an operation of changing the already-displayed time in the time icon is detected by the detecting unit 1501, determining the time after the user changes the already-displayed time in the time icon, and taking the changed time as the delay time for reminding to process the notification message.

The specific manners in which operations are executed by the respective modules in the apparatus of the above examples have been described in detail in the examples regarding the method, and details will not be repeated herein.

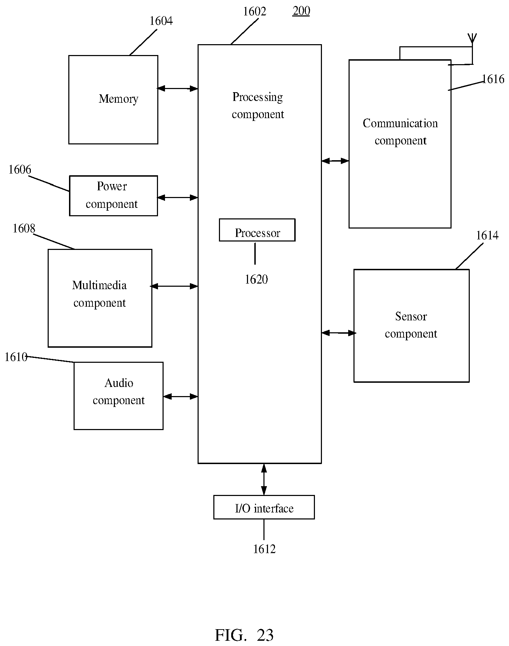

FIG. 23 is a block diagram of a device 200 for notification message processing according to an example of the present disclosure. For example, the device 200 can be a mobile phone, a computer, a digital broadcast terminal, a messaging device, a gaming console, a tablet, a medical device, exercise equipment, a personal digital assistant, and the like.

Referring to FIG. 23, the device 200 can include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 200, such as the operations associated with display, telephone calls, data communications, camera operations, and recording operations. The processing component 1602 can include one or more processors 1620 to execute instructions to perform all or part of the steps in the above described methods. Moreover, the processing component 1602 can include one or more modules which facilitate the interaction between the processing component 1602 and other components. For instance, the processing component 1602 can include a multimedia module to facilitate the interaction between the multimedia component 1608 and the processing component 1602.

The memory 1604 is configured to store various types of data to support the operation of the device 200. Examples of such data include instructions for any applications or methods operated on the device 200, contact data, phonebook data, messages, pictures, video, etc. The memory 1604 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the device 200. The power component 1606 can include a power management system, one or more power sources, and any other components associated with the generation, management, and distribution of power in the device 200.

The multimedia component 1608 includes a screen providing an output interface between the device 200 and the user. In some examples, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some examples, the multimedia component 1608 includes a front camera and/or a rear camera. The front camera and the rear camera can receive an external multimedia datum while the device 200 is in an operation mode, such as a photographing mode or a video mode. Each of the front camera and the rear camera can be a fixed optical lens system or have focus and optical zoom capability.

The audio component 1610 is configured to output and/or input audio signals. For example, the audio component 1610 includes a microphone ("MIC") configured to receive an external audio signal when the device 200 is in an operation mode, such as a call mode, a recording mode, and a voice recognition mode. The received audio signal can be further stored in the memory 1604 or transmitted via the communication component 1616. In some examples, the audio component 1610 further includes a speaker to output audio signals.

The I/O interface 1612 provides an interface between the processing component 1602 and peripheral interface modules, such as a keyboard, a click wheel, buttons, and the like. The buttons can include, but are not limited to, a home button, a volume button, a starting button, and a locking button.

The sensor component 1614 includes one or more sensors to provide status assessments of various aspects of the device 200. For instance, the sensor component 1614 can detect an open/closed status of the device 200, relative locating of components, e.g., the display and the keypad, of the device 200, a change in position of the device 200 or a component of the device 200, a presence or absence of user contact with the device 200, an orientation or an acceleration/deceleration of the device 200, and a change in temperature of the device 200. The sensor component 1614 can include a proximity sensor configured to detect the presence of nearby objects without any physical contact. The sensor component 1614 can also include a light sensor, such as a CMOS or CCD image sensor, for use in imaging applications. In some examples, the sensor component 1614 can also include an accelerometer sensor, a gyroscope sensor, a magnetic sensor, a pressure sensor, or a temperature sensor.

The communication component 1616 is configured to facilitate communication, wired or wirelessly, between the device 200 and other devices. The device 200 can access a wireless network based on a communication standard, such as Wi-Fi, 2G, 3G, 4G/LTE, 5G/NR or a combination thereof. In one example of the present disclosure, the communication component 1616 receives a broadcast signal or broadcast associated information from an external broadcast management system via a broadcast channel. In one example of the present disclosure, the communication component 1616 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In examples of the present disclosure, the device 200 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In examples of the present disclosure, there is further provided a non-transitory computer-readable storage medium including instructions, such as included in the memory 1604, executable by the processor 1620 in the device 200, for performing the above described methods. For example, the non-transitory computer-readable storage medium can be a ROM, a RAM, a CD-ROM, a magnetic tape, a floppy disc, an optical data storage device, and the like.

The technical solutions provided by examples of the present disclosure can achieve the following advantages: a pop-up window of the notification message different from the application information is displayed in the display interface of the current application that is run by the terminal, if it is inconvenient for the user to process the notification message in time at this moment, the user can perform a delay processing operation on the pop-up window of the notification message, different delay processing operations correspond to different delay processing modes, in which way, the user can perform a corresponding delay processing operation according to the importance of the notification message; a delay processing is performed on the notification message through the delay processing operation detected by the terminal, which helps the user to process the notification message more flexibly and prevents the user from forgetting to process the important messages notified by other applications in a hurry when processing the current transaction.

It can be understood that "a plurality of' in the present disclosure refers to two or more, and other quantifiers are similar. The "and/or", which describes the association relationship of related objects, means that there can be three types of relationship, for example, A and/or B can mean three cases that A exists alone, A and B exist together, and B exists alone. The character "/"generally indicates that the associated objects in the context are of an "or" relationship. The singular forms "a/an", "the" and "said" are also intended to include the plural forms, unless the context clearly indicates other meaning.

It can be further understood that the terms "first" and "second" and the like are used to describe various types of information, but these information should not be limited to these terms. These terms are only used to distinguish the same type of information from each other and do not indicate a specific sequence or importance. In fact, the expressions "first" and "second" and the like can be used interchangeably. For example, without departing from the scope of the present disclosure, the first information can also be referred to as the second information, and similarly, the second information can also be referred to as the first information.

It can be further understood that unless otherwise specified, "connection" includes direct connection between two without other components, and also includes indirect connection between two with other components.

It can be further understood that although the operations are described in a specific order in the drawings in the examples of the present disclosure, it should not be understood that these operations are required to be performed in the specific order or in the serial order shown, or all the operations shown are required to be performed to obtain the desired results. In certain circumstances, multitasking and parallel processing can be beneficial.

Other examples of the present disclosure can be available to those skilled in the art upon consideration of the specification and practice of the various examples disclosed herein. The present disclosure is intended to cover any variations, uses, or adaptations of the present disclosure following general principles of the present disclosure and including the common general knowledge or conventional technical means in the art. The specification and examples can be shown as illustrative only, and the true scope the present disclosure is indicated by the following claims.

It will be understood that the present disclosure is not limited to the exact construction that has been described above and illustrated in the accompanying drawings, and that various modifications and changes can be made without departing from the scope thereof. It is intended that the scope of the present disclosure is limited only by the appended claims.

## Claims

1. A notification message processing method, comprising:
in response to determining that a terminal is triggered to display a notification message different from a current application, detecting (S 101), by the terminal running the current application, a delay processing operation on the notification message, the delay processing operation being configured to trigger a delay processing on the notification message, wherein different delay processing operations are respectively corresponding to different delay processing modes; and
performing (S102) the delay processing on the notification message based on the detected delay processing operation.

2. The method according to claim 1, wherein the performing (S102) the delay processing on the notification message based on the detected delay processing operation comprises:
in response to the detected delay processing operation comprising (S201) a first delay processing operation, jumping (S202) to an interface for processing the notification message in response to determining that the terminal stops running the current application.

3. The method according to claim 1 or 2, wherein the performing (S102) the delay processing on the notification message based on the detected delay processing operation comprises:
in response to determining that the delay processing operation comprises a second delay processing operation, displaying (S301) tag information at a first position on a current display interface of the current application, wherein the tag information is configured to mark the notification message for the delay processing; and
in response to detecting a touch operation on a target notification message, jumping (S302) from the current display interface to an application interface corresponding to the target notification message.

4. The method according to claim 2, wherein the jumping (S202) to the interface for processing the notification message in response to determining that the terminal stops running the current application comprises:
in response to a plurality of notification messages, sequentially jumping to interfaces for processing the plurality of notification messages according to a priority sequence of the plurality of notification messages in response to determining that the terminal stops running the current application.

5. The method according to claim 4, wherein the priority sequence from high to low is determined (S401) according to a chronological sequence of the first delay processing operations corresponding to the plurality of notification messages.

6. The method according to claim 3, wherein the method further comprises:
displaying (S402) tag information corresponding to the plurality of notification messages according to a processing priority sequence of the plurality of notification messages;
wherein the processing priority sequence is at least one of followings:
determined based on application types of applications corresponding to the plurality of notification messages; or
determined from high to low based on a chronological sequence of the second delay processing operation respectively corresponding to the plurality of notification messages.

7. The method according to claim 6, wherein the method further comprises:
in response to receiving an operation of adjusting the processing priority sequence, adjusting and displaying (S501), based on the operation, the tag information of the plurality of notification messages after the processing priority sequence is adjusted; and
sequentially jumping (S502) to the interfaces for processing the plurality of notification messages according to an adjusted processing priority sequence.

8. The method according to claim 1, wherein the performing (S102) the delay processing on the notification message based on the detected delay processing operation comprises:
in response to the detected delay processing operation comprising (S601, S701) a third delay processing operation, displaying (S602) the notification message again in response to detecting elapse of a predetermined delay time to remind a user to process the notification message.

9. The method according to claim 8, wherein the predetermined delay time comprises at least one of the followings:
a default delay time set in advance in the terminal; and
a delay time manually set by the user.

10. The method according to claim 9, wherein the predetermined delay time is displayed by a time icon;
wherein the delay time manually set by the user is set by:
in response to detecting an operation of changing an already-displayed time in the time icon, determining (S702) a changed time after the user changes the already-displayed time in the time icon, and taking the changed time as the delay time for reminding the user to process the notification message.

11. A notification message processing apparatus (200), comprising:
a processor (1620);
a memory (1604) for storing instructions executable by the processor;
wherein the processor is configured to:
in response to determining that a terminal is triggered to display a notification message different from a current application, detecting, by the terminal running the current application, a delay processing operation on the notification message, the delay processing operation being configured to trigger a delay processing on the notification message, wherein different delay processing operations are respectively corresponding to different delay processing modes; and
performing the delay processing on the notification message based on the detected delay processing operation.

12. The apparatus according to claim 11, wherein the processor is further configured to perform the delay processing on the notification message based on the detected delay processing operation by:
in response to the detected delay processing operation comprising a first delay processing operation, jumping to an interface for processing the notification message in response to determining that the terminal stops running the current application, and
preferably, in response to a plurality of notification messages, sequentially jumping to interfaces for processing the plurality of notification messages according to a priority sequence of the plurality of notification messages in response to determining that the terminal stops running the current application.

13. The apparatus according to claim 11 or 12, the processor is further configured to perform a delay processing on the notification message based on a detected delay processing operation by:
in response to determining that the delay processing operation comprises a second delay processing operation, displaying tag information at a first position on a current display interface of the current application, wherein the tag information is configured to mark the notification message for the delay processing; and
in response to detecting a touch operation on a target notification message, jumping from the current display interface to an application interface corresponding to the target notification message, and
preferably, displaying tag information corresponding to the plurality of notification messages according to a processing priority sequence of the plurality of notification messages;
wherein the processing priority sequence is at least one of followings:
the priority sequence determined based on application types of applications corresponding to the plurality of notification messages; or
the priority sequence determined from high to low based on a chronological sequence of the second delay processing operation respectively corresponding to the plurality of notification messages , and
preferably, in response to receiving an operation of adjusting the processing priority sequence, adjusting and displaying, based on the operation, the tag information of the plurality of notification messages after the processing priority sequence is adjusted; and
sequentially jumping to the interfaces for processing the plurality of notification messages according to an adjusted processing priority sequence.

14. The apparatus according to claim 12, wherein the priority sequence from high to low is determined according to a chronological sequence of the first delay processing operations corresponding to the plurality of notification messages, and preferably, in response to the detected delay processing operation comprising a third delay processing operation, displaying the notification message again in response to detecting elapse of a predetermined delay time to remind a user to process the notification message.

15. A non-transitory computer-readable storage medium, having stored thereon instructions that, when executed by a processor of a terminal, enables the terminal to execute the notification message processing method according to any of claims 1-10.
